# EUROPEAN PATENT SPECIFICATION

(11) **EP 3 181 538 B1**
(45) Date of publication and mention of the grant of the patent: **17.04.2024**
(21) Application number: 15382623.5
(22) Date of filing: 15.12.2015
(51) Int. Cl.: C05D 9/02, C05F 11/08

(54) **USE OF A FERTILISER COMPOSITION INCLUDING COPPER, IRON AND MANGANESE IONS COMPLEXED WITH AMINO ACIDS TO IMPROVE THE SOLUBILIZATION OF PHOSPHORUS BY THE MICROORGANISMS PRESENT IN THE SOIL**
VERWENDUNG EINER DÜNGEMITTELZUSAMMENSETZUNG MIT KUPFER-, EISEN- UND MANGANIONEN DIE ZUR VERBESSERUNG DER LÖSLICHKEIT VON PHOSPHOR DURCH IM BODEN BEFINDLICHE MIKROORGANISMEN MIT AMINOSÄUREN KOMPLEXIERT SIND
UTILISATION D'UNE COMPOSITION D'ENGRAIS COMPRENANT DES IONS DE CUIVRE, FER ET MANGANÈSE COMPLEXÉS AVEC DES ACIDES AMINÉS POUR AMÉLIORER LA SOLUBILISATION DE PHOSPHORE PAR DES MICRO-ORGANISMES PRÉSENTS DANS LE SOL

(43) Date of publication of application: 21.06.2017
(73) Proprietor: FERTINAGRO BIOTECH, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); COLOM TOMAS, Elena, 44195 TERUEL (ES); FERRER GINES, María, 44195 TERUEL (ES); NARANJO OLIVERO, Miguel Angel, 44195 TERUEL (ES)
(74) Representative: González López-Menchero, Álvaro Luis

(56) References cited:
- WO-A2-2007/006521
- GB-A- 2 431 153
- US-A1- 2005 235 718
- US-A1- 2010 154 498
- DATABASE WPI Week 200811 Thomson Scientific, London, GB; AN 2008-B51949 XP002757921, & CN 101 003 442 A (XINJIANG HUISEN BIOTECHNOLOGY CO LTD) 25 July 2007 (2007-07-25)
- DATABASE WPI Week 199130 Thomson Scientific, London, GB; AN 1991-215713 & CN 1 046 886 A (SUN SHENGGE) 14 November 1990 (1990-11-14)

## Description

The present invention relates to the use of a fertiliser composition including metal ions complexed with amino acids to enhance the solubilization of phosphorus by microorganisms in the soil, thereby facilitating the absorption of phosphorus by plants.

More specifically, the fertiliser composition includes divalent metal ions of copper, manganese and iron complexed with amino acids (copper, iron and manganese aminoates) to improve the ability of microorganisms present in the soil to solubilize phosphorus, usually called phosphorus solubilizing microorganisms, and thus increase the amount of phosphorus absorbable by plants in the soil, thereby improving growth or development.

This fertiliser composition therefore facilitates not only the development and growth of plants but also constitutes a treatment for soils, specifically for the microorganisms present therein, also allowing combating the problem of the accumulation of phosphorus in soils and reducing the need to fertilise them with phosphorus.

Phosphorus is one of the chemical elements essential to life for both animals and plants, as it forms part of nucleic acids, of ATP and other molecules including the phosphate ion in their structure and storing energy, for example phospholipids. Its fundamental reserve is in the earth's crust. In general, agricultural soils contain good phosphorus reserves as a result of regular fertiliser application, but its availability to the plant is scarce due to the chemical processes that "fix" the soluble phosphorus fertilisers in insoluble forms unsuitable for plant nutrition, such as the formation of calcium phosphates in alkaline soils and iron and aluminium phosphates in acidic soils (Sanyal, S. K. and De Data, S. K. Chemistry of phosphorus transformation in soil. Adv Soil Sci 16: pp. 1-120, 1991). Phosphorus is found in both organic and inorganic forms in soils. Plants absorb phosphorus almost exclusively in the soluble form, represented by phosphate anions, usually HPO₄⁻² and H₂PO₄⁻¹. The concentrations of these anions in solution are about 1 to 10 µM in equilibrium with the solid phase of the soil. In this way, the dissolved inorganic phosphorus satisfies the demand of crops for a few hours during the growth period (Richardson, A.E., Soil microorganisms and phosphorous availability. In Soil Biota: management in sustainable farming systems. Eds. C E Pankhurst, B M Doube, VVSR Gupta; pp. 50-62. CSIRO, Victoria, Australia, 1994). It is considered that these quantities are extremely small compared to those required for the biological processes associated with optimal plant growth.

Thus, phosphorus is one of the chemical fertilisers most applied to soils, mainly in the form of inorganic phosphorus. However, this phosphorus is transformed into insoluble phosphorus, so it is impossible to be absorbed by plants.

Certain microorganisms exist, called phosphate solubilizing microorganisms or MSP, involved in the transformation of soil phosphorus and are integral components of the phosphorus cycle. These microorganisms are involved in the solubilization of inorganic phosphorus, organic phosphate mineralisation as well as their immobilisation.

The phosphate solubilizing microorganisms constitute up to 40% of the population of soil bacteria and a significant portion of them are isolated from the rhizosphere (Kucey, R. M. N. Phosphate-solubilizing bacteria and fungi in various cultivated and virgin Alberta soil. Canadian Journal of Soil Science 63: pp. 671-678, 198314).

Solubilization of mineral phosphorus is a process primarily related to the production and release of organic acids of low molecular weight by these phosphate solubilizing microorganisms in the soil. Within this group are the phosphate solubilizing bacteria, which are free-living in the soil and are able to adapt, colonise and stay in the rhizosphere of the plant and favour its growth or development. These microorganisms are capable of solubilizing the inorganic phosphate of different compounds, such as bicalcium phosphate, tricalcium phosphate and phosphate rocks (Illmer, P. and F. Schinner. 1995. Solubilization of inorganic calcium phosphates solubilization mechanisms. Soil Biol. Biochem. 27: 257-263).

There are 13 genera of bacteria with the capacity to solubilize phosphate: Pseudomonas, Bacillus, Rhizobium, Burkholderia, Achromobacter, Agrobacterium, Micrococcus, Aerobacter, Flavobacterium, Mesorhizobium, Azotobacter, Azospirillum and Erwinia (Sperber, 1958b; Goldstein, 1986; Rodriguez and Fraga, 1999).

In various studies (see for example Banik S, Dey BK, Available phosphate content of an alluvial soil is influenced by inoculation of some isolated phosphate-solubilizing microorganisms, Plant Soil 1982; 69: 353-64) the phosphorus solubilization capacity of these microorganisms is attributed to the production of organic acids, being the most significant, gluconic acid, followed by 2-keto-gluconic acid, lactic acid, acetic acid, isovaleric acid or isobutyl acid among others. Gluconic acid is produced mainly by Pseudomonas sp. (Illmer y Shinner, 1992), Erwinia herbicola (Liu et al., 1992), Pseudomonas cepacia (Goldstein et al., 1993) y Burkholderia cepacia (Rodriguez y Fraga 1999; Lin, et al., 2006; Song et al., 2008).

Gluconic acid, the principal organic acid produced by the phosphate solubilizing microorganisms and which is capable of solubilizing phosphorus, is produced from the following reaction catalysed by the glucose oxidase enzyme:

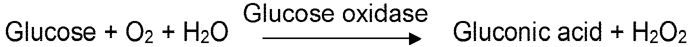

The glucose oxidase enzyme (GOx) is an oxidoreductase which catalyses the oxidation of glucose, reducing oxygen to hydrogen peroxide. Glucose oxidase catalyses the oxidation of β-D-glucose to D-glucono-1,5-lactone, which is hydrolysed to gluconic acid. To act as a catalyst, the GOx requires a cofactor, flavin adenine dinucleotide (FAD), a common component of biological redox reactions. In the redox reaction catalysed by the GOx, FAD acts as the initial electron acceptor and is reduced to FADH₂. Then the FADH₂ is oxidized by molecular oxygen (O₂) in the role of final electron acceptor. Oxygen is capable of this due to its larger reduction potential. Consequently O₂ is reduced to hydrogen peroxide (H₂O₂). It is a flavoprotein containing FAD, and is highly specific for D-glucose.

In order to improve the catalytic activity of these enzymes, thereby improving production of gluconic acid, some enzymes require the presence of additional components, known as cofactors, which generally can be inorganic ions, coenzymes and/or prosthetic groups. In the case of inorganic metal ions, these may be an integral part of the structure of the enzyme or may be associated with the substrate, helping the bond with the enzyme and increasing the catalytic activity.

Thus, in the fertiliser composition, ions are added in order to improve the catalytic activity of these enzymes that catalyse the formation of organic acids, mainly of gluconic acid secreted by the aforementioned phosphate solubilizing microorganisms.

From the prior art fertiliser compositions are known, which favour the absorption of metal ions by plants. For example, in EP2171105B1, "Metal component absorption enhancer for plant" it is described the use of 5-aminolevulinic acid to improve absorption by plants of a metallic element selected from groups 2-12 of the third or fourth period of the Periodic Table of Elements. Similarly, US5504055A describes a method for preparing amino acid metal chelates easily absorbable by plants.

Other documents describing plant nutrient compositions comprising non complexed forms of amino acids and metals are GB2431153, US2010154498,WO2007/006521, US2005235718.

CN101003442 describes a microbial fertiliser comprising nitrogen-fixing bacteria, phosphorous bacteria, potassium bacteria, and Bacillus in combination with metal cation amino acid chelates.

The object of the present invention is the use of a fertiliser composition including divalent metal ions of copper, iron and manganese complexed with amino acids, in the range of 0.01 to 9.00% by mass with respect to the fertiliser composition, to enhance the solubilization of phosphorus by microorganisms in the soil, this increase being based on the presence of phosphorus, particularly of soluble inorganic phosphorus, to promote or enhance the catalytic activity of these enzymes that catalyse the formation of organic acids, mainly of gluconic acid secreted by the phosphate solubilizing microorganisms present in said soils.

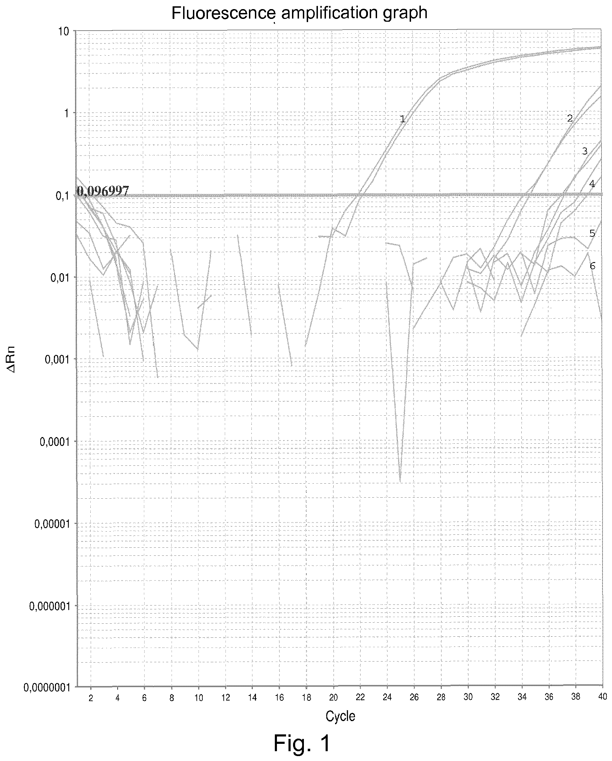

In Fig. 1 is shown a PCR amplification graph obtained by a detection system with SYBR Green, as well as the fluorescence emission curves correlating to each cycle with the evolution of microorganisms in time, the assay end time curves are shown (control (2) and sample of the invention (1)) and the initial time curves (control (4) and sample with fertiliser (3)). To avoid false positives, two negative control samples (5) and (6) are included. Each assay was performed in duplicate.

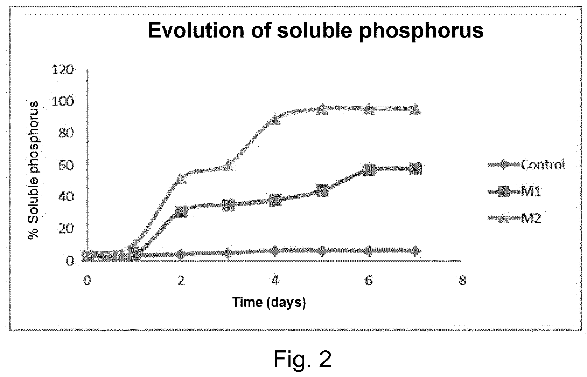

In Fig. 2 is shown how the evolution of soluble phosphorus available to plants of the fertiliser composition of the invention considerably increases over the time compared to a control with a phosphated fertiliser and a composition containing ions not complexed with amino acids.

In the present invention, the term "fertiliser composition" refers to any organic or inorganic, natural or synthetic composition, that provides plants with one or more of the indispensable nutritive elements for their normal vegetative growth, usually primary macro-elements (N, P, K), secondary macro-elements (Ca, Mg, S) and micro-elements (B, Cl, Co, Cu, Fe, Mn, Mo and Zn). Thus the term "fertiliser composition" includes, in particular, simple (contained in one of the following macro-elements: nitrogen, phosphorus or potassium) and complexed (contained in more than one of the following macro-elements: nitrogen, phosphorus and potassium), mineral fertilisers, organic fertilisers, organic-mineral fertilisers, etc., such as P fertilisers, K fertilisers, N fertilisers, NP fertilisers, PK fertilisers, NK fertilisers or NKP fertilisers.

The fertiliser composition includes divalent metal ions of copper, iron and manganese (Cu²⁺, Fe²⁺ and Mn²⁺) complexed with amino acids to enhance the solubilization of phosphorus by microorganisms in the soil, this increase being based on the presence of soluble phosphorus in the soil, particularly inorganic phosphorus, in promoting or enhancing the catalytic activity of these enzymes that catalyse the formation of organic acids secreted by the phosphate solubilizing microorganisms such as those of the genera Pseudomonas, Bacillus, Rhizobium, Burkholderia, Achromobacter, Agrobacterium, Micrococcus, Aerobacter, Flavobacterium, Mesorhizobium, Azotobacter, Azospirillum and Erwinia mentioned above, and mainly gluconic acid. The use of amino acids as complexing agent is not only because they are substances with high complexing capacity, but is also due to the fact that they are natural substances that do not affect the growth of microorganisms, being also considered as special fertilisers for their action on the plant's physiology. Thus, amino acids constitute a complexing agent of natural origin and therefore completely biodegradable.

The method for preparing the fertiliser composition of the invention is not critical. In one exemplary embodiment, said composition is prepared by first adding different amounts of the cations Cu²⁺, Fe²⁺ and Mn²⁺, such as indicated below, to a solution of amino acids. After checking that complexation of these elements has occurred, the solution obtained is added to a fertiliser composition of the type mentioned above, that is, of the N, P, K, NP, NK, PK or NPK type, the latter being solid or liquid.

The fertiliser composition includes divalent metal ions of copper, iron and manganese complexed with amino acids in a concentration of 0.01 to 9.00% m/m (percentage by mass) relative to the total of the fertiliser composition. In a preferred embodiment, the end concentrations of each of the metal ions in complexed form with respect to the fertiliser are shown in the following table:

| Metal ions | Concentration (in m/m relative to the total of the fertiliser composition) |
|---|---|
| Cu²⁺ | 0.01%-3% |
| Fe²⁺ | 0.01%-3% |
| Mn²⁺ | 0.01%-3% |

An assay was conducted to study the evolution of microorganisms capable of solubilizing phosphorus through quantification by PCR in real time. For this purpose, the corresponding primers were used to detect microorganisms capable of producing the glucose oxidase enzyme (from the genera Pseudomonas, Bacillus, Rhizobium, Burkholderia, Achromobacter, Agrobacterium, Micrococcus, Aerobacter, Flavobacterium, Mesorhizobium, Azotobacter, Azospirillum and Erwinia), an enzyme which catalyses the reaction of gluconic acid production.

Thus, a culture medium including said microorganisms with excess sugar was prepared so as to eliminate the carbon source as limiting factor in the development of microorganisms. Next, two culture samples were prepared, the divalent metal ions of iron, manganese and copper complexed with amino acids being added to one of them, and a control containing only the microorganisms to the other. Both culture samples were cultured separately in a culture chamber at controlled temperature and stirring. Finally, an assay was conducted to qualitatively detect the microorganisms capable of generating gluconic acid. Assays were performed in duplicate to avoid false results. In Fig. 1 are shown the fluorescence emission curves correlating to each of the cycles, wherein said emission is proportional to the amount of specific DNA enzyme in each of the samples assayed (with the fertiliser composition and without it). The time related evolution in the number of microorganisms under study is shown.

As can be seen in this Figure 1, a higher fluorescence at a lower number of cycles for the target fraction of DNA of the enzyme glucose oxidase is reached, indicating that the fertiliser composition subject matter of the invention favours the growth of microorganisms capable of producing said enzyme.

In the following table the results are shown in cycle times of each of the amplification curves of the samples (detection system with SYBR Green).

**Table 1**

| | **Ct over time** | | | |
|---|---|---|---|---|
| | **Start time (0h)** | | **Finish time (144h)** | |
| **Control** | 37.91 | 37.28 | 34.71 | 34.47 |
| **Sample with Cu²⁺, Fe²⁺ and Mn²⁺ complexed with amino acids** | 38.28 | 38.67 | 21.95 | 22.41 |

Both samples of culture were added to a phosphated fertiliser in order to measure the variation in the content of soluble phosphorus over time. For comparison, the action of the divalent ions not complexed with amino acids was also evaluated, this only with the phosphated fertiliser. The ranges of concentrations (% by mass relative to the mass of the total fertiliser composition) used are shown in Table 2 below.

**Table 2**

| **Control** | Phosphated fertiliser | |
|---|---|---|
| **M1** | Phosphated fertiliser | |
| | Cu²⁺ | 0.2% m/m |
| | Mn²⁺ | 0.8% m/m |
| | Fe²⁺ | 0.2% m/m |
| **M2** | Phosphated fertiliser | |
| | Cu² complexed with amino acids | 0.2% m/m |
| | Mn²⁺ complexed with amino acids | 0.8% m/m |
| | Fe²⁺ complexed with amino acids | 0.2% m/m |

In Fig. 2 the results obtained are shown. As can be seen in this figure, the percentage of soluble phosphorus available to plants considerably increases with respect to the phosphated fertilizer control, being nearly doubled, and by about 60% with respect to a composition containing ions not complexed with amino acids.

## Claims

1. Use of a fertiliser composition of the N, P, K, NP, NK, PK or NPK type including divalent metal ions of copper, iron and manganese complexed with amino acids to enhance the capacity of microorganisms present in the soil to solubilize the phosphorus and increase the amount of phosphorus absorbable by plants in the soil, and the concentration of divalent metal ions of copper, manganese and iron complexed with amino acids is in the range of 0.01 to 9.00% by mass with respect to the fertiliser composition.

2. Use according to claim 1, **characterised in that** the phosphate solubilizing microorganisms belong to the genera Pseudomonas, Bacillus, Rhizobium, Burkholderia, Achromobacter, Agrobacterium, Micrococcus, Aerobacter, Flavobacterium, Mesorhizobium, Azotobacter, Azospirillum and Erwinia.

3. Use according to claim 1, **characterised in that** the concentration of divalent metal ions of copper is within the range of 0.01% - 3.00%.

4. Use according to claim 1, **characterised in that** the concentration of divalent metal ions of iron is within the range of 0.01% - 3.00%.

5. Use according to claim 1, **characterised in that** the concentration of divalent metal ions of manganese is within the range of 0.01 % - 3.00%.

## Patentansprüche

1. Verwendung einer Düngemittelzusammensetzung vom N-, P-, K-, NP-, NK-, PK- oder NPK-Typ, enthaltend zweiwertige Metallionen von Kupfer, Eisen und Mangan, komplexiert mit Aminosäuren, um die Fähigkeit im Boden vorhandener Mikroorganismen zur Solubilisierung des Phosphors zu verstärken und die Menge an Phosphor, die von Pflanzen im Boden aufgenommen werden kann, zu erhöhen, und die Konzentration zweiwertiger Metallionen von Kupfer, Mangan und Eisen, komplexiert mit Aminosäuren, liegt im Bereich von 0,01 bis 9,00 Massen-%, bezogen auf die Düngemittelzusammensetzung.

2. Verwendung gemäß Anspruch 1, **dadurch gekennzeichnet, dass** die Phosphat solubilisierenden Mikroorganismen zu den Gattungen Pseudomonas, Bacillus, Rhizobium, Burkholderia, Achromobacter, Agrobacterium, Micrococcus, Aerobacter, Flavobacterium, Mesorhizobium, Azotobacter, Azospirillum und Erwinia gehören.

3. Verwendung gemäß Anspruch 1, **dadurch gekennzeichnet, dass** die Konzentration zweiwertiger Metallionen von Kupfer im Bereich von 0,01 % - 3,00 % liegt.

4. Verwendung gemäß Anspruch 1, **dadurch gekennzeichnet, dass** die Konzentration zweiwertiger Metallionen von Eisen im Bereich von 0,01 % - 3,00 % liegt.

5. Verwendung gemäß Anspruch 1, **dadurch gekennzeichnet, dass** die Konzentration zweiwertiger Metallionen von Mangan im Bereich von 0,01 % - 3,00 % liegt.

## Revendications

1. Utilisation d'une composition d'engrais du type N, P, K, NP, NK, PK ou NPK incluant des ions métalliques divalents de cuivre, de fer et de manganèse complexés avec des acides aminés pour améliorer la capacité de micro-organismes présents dans le sol à solubiliser le phosphore et augmenter la quantité de phosphore absorbable par des plantes dans le sol, et la concentration d'ions métalliques divalents de cuivre, de manganèse et de fer complexés avec des acides aminés est dans la plage de 0,01 à 9,00 % en masse par rapport à la composition d'engrais.

2. Utilisation selon la revendication 1, **caractérisée en ce que** les micro-organismes solubilisant le phosphate appartiennent aux genres Pseudomonas, Bacillus, Rhizobium, Burkholderia, Achromobacter, Agrobacterium, Micrococcus, Aerobacter, Flavobacterium, Mesorhizobium, Azotobacter, Azospirillum et Erwinia.

3. Utilisation selon la revendication 1, **caractérisée en ce que** la concentration d'ions métalliques divalents de cuivre est dans la plage de 0,01 % à 3,00 %.

4. Utilisation selon la revendication 1, **caractérisée en ce que** la concentration d'ions métalliques divalents de fer est dans la plage de 0,01 % à 3,00 %.

5. Utilisation selon la revendication 1, **caractérisée en ce que** la concentration d'ions métalliques divalents de manganèse est dans la plage de 0,01 % à 3,00 %.
